# EUROPÄISCHE PATENTANMELDUNG

(11) **EP 1 318 049 A2**
(43) Veröffentlichungstag der Anmeldung: **11.06.2003**
(21) Anmeldenummer: 02027480.9
(22) Anmeldetag: 10.12.2002
(51) Int. Cl.: B60R 15/00, B60R 15/04, E04B 1/348, A47K 4/00

(54) **Nasszelle, insbesondere zur Verwendung in Wohnwagen oder Reisemobilen**

(30) Priorität: 10.12.2001 EP 01129182
(71) Anmelder: Hobby-Wohnwagenwerk Ing. Harald Striewski GmbH, 24787 Fockbek (DE)
(72) Erfinder: Striewski, Harald, 24787 Fockbek (DE)
(74) Vertreter: Stenger, Watzke & Ring Patentanwälte

(57) **Zusammenfassung**

Um eine Naßzelle, insbesondere zur Verwendung in Wohnwagen oder Reisemobilen zu schaffen, die bei kompakter und raumsparender Bauweise eine Vielzahl von sanitären Funktionen bietet, wird mit der Erfindung vorgeschlagen, daß diese mindestens ein die Naßzelle (1) in zwei Funktionsbereiche (2, 10) unterteilendes Trennelement (6) enthält, welches zur Funktionsanpassung der Naßzelle (1) verlagerbar ist.

## Beschreibung

Die vorliegende Erfindung betrifft eine Naßzelle, wie sie insbesondere in Wohnwagen oder Reisemobilen Verwendung findet.

Naßzellen sind kompakte Sanitärräume, die insbesondere in Fällen von geringem Raumangebot Verwendung finden. So werden Naßzellen beispielsweise in sehr kleinen Wohneinheiten eingebaut.

Insbesondere finden Naßzellen Verwendung in Wohnwagen oder Reisemobilen, in die sie zur Gewährleistung einer sanitären Grundausstattung eingerüstet werden. Angesichts des durch die Fahrzeuggröße begrenzten Raumangebots in einem Wohnwagen bzw. Reisemobil sind bei dessen Raumaufteilung Überlegungen hinsichtlich einer optimierten Raumnutzung vorrangig. Aus diesem Grund sind die in Wohnwagen bzw. Reisemobile integrierten Naßzellen in der Regel besonders kompakt ausgebildet. Eine typische Naßzelle ist beispielsweise als Waschraum und/oder WC eingerichtet und enthält neben einer Toilette, beispielsweise einer Kassettentoilette, ein Waschbecken sowie Stauplatz in Form von Ober- und Unterschränken. Von der Größe ist die Naßzelle dabei typischerweise derart bemessen, daß sie von einer einzigen Person zur Zeit genutzt werden kann. Wird neben einem kombinierten Waschraum und WC in dem Wohnwagen bzw. dem Reisemobil zusätzlich eine Duscheinheit gewünscht, ist die Naßzelle entweder entsprechend vergrößert auszubilden, oder es ist eine zweite Naßzelle mit einer Duschkabine vorzusehen. In jedem Fall bedeutet die Anordnung eines Waschraums und WC's sowie einer Duschgelegenheit in einem Wohnwagen bzw. einem Reisemobil einen erhöhten Platzbedarf für die sanitären Einrichtungen, welcher Platzbedarf zu Lasten des sonstigen Wohnraums in dem Wohnwagen bzw. Reisemobil fällt. Mit anderen Worten Wohn- oder Schlafbereiche müssen entsprechend verkleinert ausgestaltet werden.

Ausgehend von diesen Überlegungen liegt der Erfindung die **Aufgabe** zugrunde, eine Naßzelle zu schaffen, welche bei kompakter und raumsparender Bauweise eine Vielzahl von sanitären Funktionen bietet.

Zur **Lösung** dieser Aufgabe wird mit der Erfindung vorgeschlagen eine Naßzelle, insbesondere zur Verwendung in Wohnwagen oder Reisemobilen, mit mindestens einem die Naßzelle in zwei Funktionsbereiche unterteilenden Trennelement, welches zur Funktionsanpassung der Naßzelle verlagerbar ist.

Durch das erfindungsgemäß in der Naßzelle angeordnete Trennelement können in der Naßzelle selbst zwei Funktionsbereiche geschaffen werden, wobei zur Funktionsanpassung der Naßzelle das Trennelement verlagert wird. So wird zur Nutzung eines ersten Funktionsbereiches das Trennelement insoweit verlagert, als daß dieser erste Funktionsbereich den gesamten oder wenigstens den überwiegenden Raum der Naßzelle einnimmt, der zweite Funktionsbereich ist in dieser Stellung des Trennelementes auf ein Minimum reduziert bzw. vollständig eliminiert. Durch Verlagern des Trennelementes kann dann der zweite Funktionsbereich maximiert werden, wobei der erste Funktionsbereich minimiert wird, bis hin zu dessen vollständiger Eliminierung. Auf diese Weise genügt eine in ihren Abmessungen den Abmessungen einer gewöhnlichen Naßzelle entsprechende Naßzelle, um mit dieser zwei Funktionsbereiche auszubilden, also mehr Funktionen als in einer gewöhnlichen Naßzelle zu bieten.

Es lassen sich also auf engstem Raum mehr sanitäre Funktionen verwirklichen als für bisherige, gewöhnliche Naßzellen, und das bei Beibehaltung einer kompakten und raumsparenden Bauweise.

Gemäß einer Weiterbildung der Erfindung kann an dem Trennelement ein Sanitärelement angeordnet sein. Auf diese Weise wird das Trennelement selbst über die reine Trennfunktion zwischen den Funktionsbereichen und die Verlagerungsfunktion zur Funktionsanpassung der Naßzelle hinaus als Halteelement verwendet, was einen weiteren Beitrag zur Raumeinsparung bildet.

Gemäß einer Variante der Erfindung kann bei der erfindungsgemäßen Naßzelle das Trennelement zwischen zwei Extremstellungen verlagerbar sein, wobei die Naßzelle in einer ersten Extremstellung des Trennelementes als Waschraum und/oder WC und in der zweiten Extremstellung als Duschkabine nutzbar ist. Bei dieser Variante der Erfindung wird eine in ihren Außenabmessungen im wesentlichen einer gewöhnlichen Naßzelle entsprechende Naßzelle zwei unterschiedlichen Funktionen zugänglich gemacht. Durch einfaches Verlagern des Trennelementes kann die Naßzelle entweder als Waschraum bzw. WC genutzt werden, sie kann in der zweiten Extremstellung des Trennelementes aber auch als Dusche verwendet werden. Die erfindungsgemäße Naßzelle vereint in dieser Variation zwei Funktionen, nämlich als Duschkabine und als Waschraum und/oder WC, in einem. Anstelle einer Waschzelle von doppelter Größe oder zwei getrennter Waschzellen vorzusehen, reicht es für die Bereitstellung der genannten Sanitärfunktionen aus, eine einzige Naßzelle in der kompakten und raumsparenden Bauweise gemäß der Erfindung vorzusehen.

Bei der Verwendung in Wohnwagen oder Reisemobilen kann damit bei im wesentlichen gleicher Raumaufteilung entweder eine zusätzliche Sanitärfunktion, nämlich eine Dusche, bereitgestellt werden, oder es kann der für eine separate Dusch-Naßzelle vorzusehende Raum eingespart und dem Wohn- oder Schlafraum, zugeschlagen werden.

Gemäß einer Weiterbildung der Erfindung ist an dem verlagerbaren Trennelement auf der Seite des als Waschraum und/oder WC nutzbaren Funktionsbereichs ein Waschbecken und an einer dem Trennelement gegenüberliegenden Wand desselben Funktionsbereichs eine Toilette angeordnet, wobei das Waschbecken und die Toilette so angeordnet sind, daß diese beim Verlagern des Trennelementes in die zweite Extremstellung platzsparend nebeneinander bzw. übereinander zu liegen kommen. Durch diese Anordnung wird eine maximale Verkleinerung des als Waschraum und/oder WC nutzbaren Funktionsbereichs bei Umrüstung der Naßzelle zur Duschkabine ermöglicht, die Duschkabine kann eine maximale Größe erhalten.

Gemäß einer Weiterbildung der Erfindung ist das Trennelement durch eine vertikal ausgerichtete und horizontal verschiebbare Trennwand gebildet. Mit einer solchen Trennwand ist es besonders einfach, eine erfindungsgemäße Naßzelle in zwei Funktionsbereiche zu unterteilen, wobei die Trennwand zur Funktionsanpassung der Naßzelle horizontal verschoben wird.

Eine solche Trennwand weist bevorzugt an ihren äußeren Rändern Dichtelemente auf, die dichtend an den Wänden der Naßzelle anliegen. Diese Dichtelemente verhindern einen Durchtritt von Wasser bei der Nutzung des einen Funktionsbereiches in den zweiten Funktionsbereich. Die Dichtelemente können beim Verschieben der Trennwand dichtend an den Wänden der Naßzelle entlang geleiten. So wird beispielsweise im Falle einer Duschkabine als einer der Funktionsbereiche verhindert, daß Duschwasser die Duschkabine durch einen zwischen der Trennwand und der Wand der Naßzelle gebildeten Spalt verläßt und in den zweiten Funktionsbereich eindringt.

Gemäß einem weiteren Merkmal der Erfindung verfügt die Naßzelle über Leuchtmittel. Diese sind über einen separat vorgesehenen Schalter vorzugsweise bedienbar, so daß der Anwender im Bedarfsfall Licht innerhalb der Naßzelle ein- bzw. ausschalten kann. Vorgesehen sein können Leuchtmittel vorzugsweise oberhalb der Waschkonsole, die an der Trennwand entweder direkt oder indirekt durch entsprechende Leuchtmittelhalter angeordnet sind. Der Vorteil dieser Anordnung ist die konstante und immer gleichbleibende Ausleuchtung der Waschkonsole, denn können die an der Trennwand ausgebildeten Leuchtmittel zusammen mit der Trennwand und der daran angeordneten Waschkonsole verschoben werden. Als besonders vorteilhaft hat sich für die Anordnung der Leuchtmittel ein Leuchtmittelhalter herausgestellt, der in seiner geometrischen Abmessung ein Gegenstück zur Waschkonsole darstellt. Eingerahmt wird auf diese Weise der zwischen Waschkonsole und Leuchtmittelhalter angeordnete Bereich durch zwei optisch gleichwirkende Formen, wodurch ein insgesamt ansprechender Eindruck erreicht wird.

Gemäß einem weiteren Merkmal der Erfindung ist die Anordnung einer Heizeinrichtung vorgesehen. Zur Regelung der Heizeinrichtung verfügt die Naßzelle entweder über eine von innerhalb der Naßzelle oder von außerhalb der Naßzelle zu bedienende Regeleinrichtung, die es dem Bediener ermöglicht, die von ihm gewünschte Temperatur innerhalb der Naßzelle einzustellen. Als Heizeinrichtung kann eine innerhalb der Naßzelle ausgebildete Heizung oder ein mit einer außerhalb der Naßzelle angeordneten Heizung strömungstechnisch verbundener Wärmeluftaustritt vorgesehen sein. Die zweite Alternative bietet sich dabei insbesondere dann an, wenn innerhalb des Wohnmobils, des Bootes oder dergleichen, das die Naßzelle beherbergt, eine Heizung bereits ausgebildet ist. In diesem Fall kann nämlich auf einfache Weise eine strömungstechnische Verbindung zwischen der bereits vorgesehenen Heizung und der Naßzelle hergestellt werden. Die Regelung der Temperatur innerhalb der Naßzelle kann über ein einfaches Öffnen oder Schließen des innerhalb der Naßzelle mündenden Wärmeluftaustritts erfolgen.

Gemäß einem weiteren Merkmal der Erfindung ist vorgesehen, daß die Trennwand auf ihrer dem als Duschraum dienenden Funktonsbereich zugewandten Seite zwei klappbar ausgebildete Duschkabinentüren aufweist. Diese Duschkabinentüren dienen der Abdichtung des Duschraumes gegenüber dem Wasch- oder Toilettenraum, so daß Spritzwasser bei einer Inbenutzungnahme des Duschraumes nicht in den Wasch- bzw. Toilettenraum übertreten kann. Die vordere der beiden Duschraumtüren schützt den Bereich der Eingangstür. Sie ist klappbar angeordnet und im aufgeklappten Zustand in einer Schiene neben der Eingangstür arretierbar. Die hintere Duschraumtür ist einstückig ausgebildet und wird beispielsweise durch einen Magnetschnapper an der Rückwand des Wasch- oder Toilettenraumes arretiert. Durch das Aufklappen beider Türen erfolgt eine wirkungsvolle Abdichtung des Duschraumes gegenüber dem Wasch- oder Toilettenraum. Vorzugsweise können die Duschraumtüren auch mit Dichtelementen versehen sein, die die Abdichtfunktion der beiden Duschraumtüren unterstützen.

Gemäß einem weiteren Merkmal der Erfindung ist die Naßzelle mit einer Dachhaube versehen. Diese ist vorzugsweise öffenbar ausgebildet, so daß sie für eine Be- und Entlüftung der Naßzelle wahlweise geöffnet werden kann. Zumindestens teilweise ist die Dachhaube vorzugsweise lichttransparent ausgebildet, so daß zur Beleuchtung der Naßzelle von außen einfallendes Licht genutzt werden kann. Die Öffnung der Dachhaube kann entweder händisch oder durch Unterstützung einer elektrischen Einrichtung durchgeführt werden.

Gemäß einem weiteren Merkmal der Erfindung ist eine für beide Funktionsbereiche gemeinsame Fußbodenwanne vorgesehen. Dies ist nicht nur aus fertigungstechnischer Sicht von Vorteil, auch ermöglicht sie die vereinfachte Ausbildung eines Abwasserabflusses. Dieser ist nämlich für beide Funktionsbereiche gemeinschaftlich innerhalb der Fußbodenwanne vorgesehen und wird sowohl für die Ableitung des Abwassers aus der Duschkabine als auch aus der Waschkonsole verwendet. Zu diesem Zweck ist die Waschkonsole mit einer an das Waschbecken angeschlossenen Abwasserleitung versehen, die zusammen mit der Trennwand beweglich verfahrbar angeordnet ist. In der Funktionsstellung Wasch- oder Toilettenraum" befindet sich das am Waschbecken angeordnete Abwasserrohr mit seinem waschbeckenentfernten Ende in strömungstechnischer Verbindung mit dem in der Fußbodenwanne ausgebildeten Abwasserabfluß, so daß im Waschbecken befindliches Abwasser durch das Abwasserrohr und den in der Fußbodenwanne ausgebildeten Abwasserabfluß abgelassen werden kann.

Gemäß einem weiteren Merkmal der Erfindung sind zur lagesicheren Positionierung der Trennwand Arretiermittel vorgesehen. Diese sind vorzugsweise selbstsichernd ausgebildet und verhindern ein ungewolltes Verfahren der Trennwand aus einer gesicherten Position heraus. Insbesondere aus sicherheitsrelevanten Gründen heraus ist die Anordnung solcher Arretiermittel von Vorteil.

Gemäß einem weiteren Merkmal der Erfindung ist vorgesehen, daß die Trennwand L-förmig ausgebildet ist und mit ihrem einen Fortsatz an der Rückwand der Naßzelle geführt wird, wobei die dem Funktionsbereich zugewandte Seite des Fortsatzes der Trennwand als multifunktionale Aufhängewand ausgebildet ist. Als multifunktionale Aufhängewand dient der dem Funktionsbereich zugewandte Fortsatz der Trennwand der Aufnahme unterschiedlichster Verstauungsmöglichkeiten, wie beispielsweise Ablagefächer, Regalböden, Hängeschränke oder dergleichen. Mit Vorteil können diese Aufbewahrungseinrichtungen individuell an der Aufhängewand angeordnet werden, so daß je nach Bedarf des die Naßzelle nutzenden Verwenders eine individuelle Einstellung der Verstauungseinrichtungen vorgenommen werden kann.

Gemäß einem weiteren Merkmal der Erfindung ist vorgesehen, daß der Wasserhahn der Waschkonsole mit einem zumindest teilweise innerhalb der Trennwand verlegten, flexiblen Schlauch zur Frischwasserzuführung strömungstechnisch verbunden ist. Vorteil dieser Ausgestaltung ist insbesondere die Sicherstellung des ständig verfügbaren Frischwassers über den an der Waschkonsole angeordneten Wasserhahn. Zudem können Leckagen oder Undichtigkeiten in vorteilhafter Weise vermieden werden, denn ist die strömungstechnische Verbindung zwischen Frischwasserzufuhr und Wasserhahn über den flexiblen Schlauch unabhängig von der Position der Trennwand immer dicht ausgebildet.

Weitere Merkmale und Vorteile der Erfindung ergeben sich aus der nachfolgenden Beschreibung eines Ausführungsbeispiels anhand der beigefügten Figuren. Dabei zeigen:
- Fig. 1: teilweise aufgeschnitten in perspektivischer Darstellung ein Ausführungsbeispiel einer erfindungsgemäßen Naßzelle, wobei sich das Trennelement in einer ersten Extremstellung befindet, und
- Fig. 2: in teilweise aufgeschnittener, perspektivischer Darstellung das Ausführungsbeispiel aus Fig. 1 mit in eine zweite Extremstellung verschobenem Trennelement.

In den Figuren sind gleiche Elemente mit gleichen Bezugszeichen versehen.

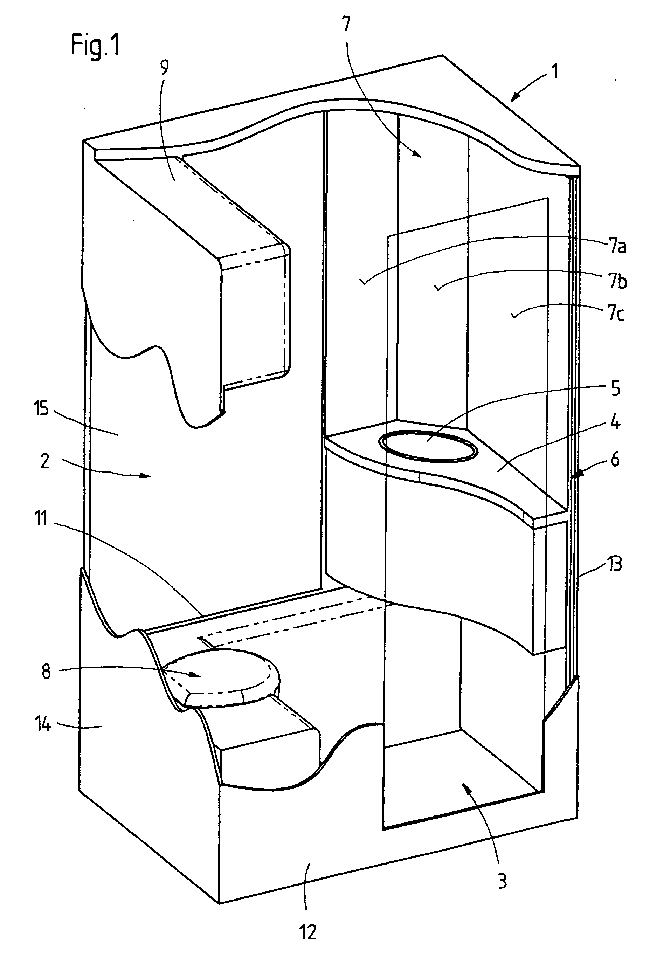

In Fig. 1 ist ein Ausführungsbeispiel einer erfindungsgemäßen Naßzelle 1 in perspektivischer Darstellung mit teilweise weggeschnittenen Seitenwänden und Decke gezeigt. Die Naßzelle 1 ist in Fig. 1 so eingerichtet, daß sie als Waschraum und WC 2 nutzbar ist. Eine mit einer nicht gezeigten Tür verschließbare Eingangsöffnung 3 ermöglicht den Zugang zu der Naßzelle 1. Die Eingangsöffnung 3 ist in einer Frontwand 12 der Naßzelle außermittig angebracht. Eine Trennwand 6 ist unmittelbar an einer der Eingangsöffnung 3 näher gelegenen Seitenwand 13 der Naßzelle 1 angeordnet. Die Trennwand 6 der Naßzelle 1 ist horizontal verschiebbar und kann aus der in Fig. 1 dargestellten Stellung in Richtung einer der Seitenwand 13 gegenüberliegenden Seitenwand 14 der Naßzelle 1 verschoben werden. Auf der der Seitenwand 13 gegenüberliegenden Seite der Trennwand 6 ist an dieser fest angeordnet eine Waschkonsole 4 mit darin eingelassenem Waschbecken 5. Die Vorderfront der Waschkonsole 4 ist im Bereich der Eingangsöffnung 3 ausgeschnitten vorzugsweise abgerundet, um ein Betreten der Naßzelle 1 zu erleichtern. Die Trennwand 6 erstreckt sich nicht nur parallel zu den Seitenwänden 13 und 14 in die Tiefe der Naßzelle 1, sondern mit einem Teil auch entlang einer Rückwand 15 der Naßzelle 1. An der Rückwand 15 der Naßzelle 1 ist eine Schiene 11 angeordnet, in der der parallel zur Rückwand 15 verlaufende Teil der Trennwand 6 geführt ist. Vorgesehen ist in diesem Zusammenhang vorzugsweise eine Schiene-Rollen-Anordnung, wobei die Rollen an der Trennwand ausgebildet sind und die Trennwand auf diesen Rollen in der Schiene 11 geführt wird. Alternativ zu Rollen können auch anderweitige Bewegungseinrichtungen vorgesehen werden, wobei es darauf ankommt, daß die Trennwand 6 in der Schiene 11 derart leichtgängig und ruckfrei geführt werden kann, daß ein Bediener auf einfache Weise die Trennwand 6 wahlweise hin und her verfahren kann. Vorgesehen sein können in diesem Zusammenhang auch an der Schiene 11 und an der Trennwand 6 angeordnete Stopelemente, die den Verfahrweg der Trennwand 6 gegenüber der Schiene 11 begrenzen, so daß ein ungewollt weites Verfahren der Trennwand 6 in vorteilhafter Weise verhindert werden kann. Vorgesehen sein können des weiteren Sicherungseinrichtungen, die die in eine bestimmte Position verfahrene Trennwand 6 gegenüber einem ungewollten Verfahren sichern. Erreicht wird durch eine solche Ausgestaltungsform, daß die Trennwand 6 in ihrer relativen Lage zur Naßzelle lagesichert fixiert werden kann, was insbesondere unter dem Aspekt der Sicherheit von Vorteil ist, denn kann eine lagegesicherte Trennwand nicht ungewollt verschoben werden. Gebildet sein können die für eine Lagesicherung der Trennwand 6 vorgesehenen Sicherungseinrichtungen durch Klemm- oder Stopelemente, Sicherungshaken, entsprechend ausgebildete Rastmittel oder dergleichen.

Oberhalb der Waschkonsole 4 befinden sich in dem gesamten Bereich der Trennwand verspiegelte Flächen 7a, 7b und 7c, die insgesamt einen Spiegel 7 bilden.

Auf der Seite der Seitenwand 14 ist in der Naßzelle 1 eine Toilette 8, hier eine Kassettentoilette, angeordnet sowie ein oberhalb der Toilette 8 angeordneter Hängeschrank 9. Darüber hinaus können eine Vielzahl weiterer Abstell- oder Aufbewahrungseinrichtungen in Form von Schränken oder Regalen vorgesehen sein. So können beispielsweise neben der Toilette an der Vorderseite des Waschraumes neben der Eingangstür Ablagefächer ausgebildet sein. Auch können Ablagefächer, ein Regal oder dergleichen an der Trennwand 6 selbst ausgebildet sein. Insbesondere kann an der Trennwand 6 oberhalb des Waschbeckens eine Aufnahmeeinrichtung in Form von Ablagefächern oder eines Regals vorgesehen sein, in die typische beim Waschen benötigte Utensilien hineingestellt werden können. Die Ablagefächer bzw. die Regalböden eines Regals sollten dabei einen solchen Abstand voneinander aufweisen, daß die beim Waschen typischerweise verwendeten Utensilien lagesicher aufgenommen werden können. Auch kann ein Ablagefach bzw. ein Regalboden an der dem Anwender zugewandten Seite mit einer Begrenzung, beispielsweise in Form einer Reling versehen sein, so daß die in einem Ablagefach oder einem Regal untergebrachten Produkte nicht ungewollt aus dem Ablagefach oder dem Regal herausfallen können. Weitere Ablagefächer oder Regale können zudem in dem Bereich der Naßzelle 1 ausgebildet sein, der als Duschbereich dient. Auch hier können dabei entsprechende Abstellmöglichkeiten sowohl an den begrenzenden Wänden der Naßzelle 1 oder an der Trennwand 6 ausgebildet sein.

Vorzugsweise ist die Trennwand 6 L-förmig ausgebildet, wobei der eine Teil der Trennwand 6 entlang der Rückwand 15 der Naßzelle 1 geführt wird, wie oben bereits ausführlich beschrieben. Der an der Rückwand 15 der Naßzelle geführte Fortsatz der Trennwand 6 kann wahlweise als Spiegelfläche oder in Form einer multifunktionalen Aufhängewand ausgestaltet sein. Die multifunktionale Aufhängewand hat dabei den Vorteil, daß sie bedarfsgerecht die vom Anwender gewünschte Aufnahme zahlreicher Objekte ermöglicht. Gebildet ist die multifunktionale Aufhängewand durch eine Vielzahl von in den Fortsatz der Trennwand 6 eingebrachter Bohrungen bzw. Ausnehmungen oder durch einen auf den Fortsatz der Trennwand 6 aufgebrachten und mit einer Vielzahl von Bohrungen bzw. Ausnehmungen versehenen Aufsatz. Die Bohrungen erfüllen dabei gemäß sowohl der ersten als auch der zweiten alternativen Ausgestaltungsform die Aufgaben, Haken, Ösen, Regalböden, Ablagefächer oder dergleichen individuell aufnehmen zu können. Je nach Bedarf des Anwenders können derlei Aufbewahrungseinrichtungen nämlich in die ausgestalteten Bohrungen eingehängt und auf diese Weise bedarfsgerecht an derjenigen Stelle der Trennwand 6 positioniert werden, die vom Anwender gewünscht ist. Dies erlaubt nicht nur eine an die Personengröße angepaßte Ausgestaltung von Aufbewahrungseinrichtungen, auch können die Abstände zwischen den einzelnen Aufbewahrungseinrichtungen individuell ausgewählt werden, so daß auch übergroße Objekte aufbewahrt und untergebracht werden können.

Des weiteren weist die Naßzelle 1 ein in der Fig. nicht gezeigtes Leuchtmittel zur Beleuchtung des Innenraums der Naßzelle 1 auf. Angeordnet sein können die Leuchtmittel dabei sowohl an den feststehenden Seitenwänden 13, 14 und 15 der Naßzelle sowie an der verschieblich angeordneten Trennwand 6. Von Vorteil ist dabei insbesondere die Anordnung von Leuchtmitteln an der Trennwand 6 oberhalb der Waschkonsole 4. Diese Ausgestaltung hat den Vorteil, daß die Leuchtmittel samt Trennwand und daran angeordneter Waschkonsole mit hin und herbewegt werden können, so daß eine immer gleichbleibende Ausrichtung der Leuchtmittel in Bezug auf die Waschkonsole eingestellt werden kann, womit in vorteilhafter Weise eine immer gleich bleibende und auf die Bedürfnisse der Anwender abgestimmte Ausleuchtung der Waschkonsole sichergestellt ist. Eine weitere Beleuchtung ist vorzugsweise innerhalb der Duschkabine vorgesehen. Diese kann feststehend oder auch beweglich an der Trennwand 6 ausgebildet sein. Die Beleuchtungen innerhalb beider Funktionsbereiche der Naßzelle lassen sich vorzugsweise getrennt voneinander bedienen, so daß wahlweise in dem einen oder dem anderen Funktionsbereich bzw. in beiden Funktionsbereichen die Beleuchtung ein- bzw. ausgeschaltet werden kann.

Zur Beheizung der Naßzelle 1, das heißt sowohl zur Beheizung des Duschraumes als auch zur Beheizung des Toilettenraumes ist in vorteilhafter Weise eine Heizung vorgesehen. Dabei kann es sich um eine separate innerhalb der Naßzelle 1 anzuordnenden Heizung oder alternativ auch um eine außerhalb der Naßzelle 1 angeordnete Heizung handeln, wobei im zweitgenannten Fall entsprechende Wärmeaustrittsöffnungen zum Beheizen der Naßzelle 1 innerhalb der Naßzelle 1 vorzusehen sind. Von besonderem Vorteil ist hierbei, wenn zur Beheizung der Naßzelle 1 eine ohnehin schon vorhandene Heizung benutzt werden kann und es für den Anschluß der Naßzelle 1 an die Heizung nur noch erforderlich ist, eine strömungstechnische Verbindung zwischen der bereits schon vorhandenen Heizung einerseits und der Naßzelle 1 andererseits auszubilden. Zur Regelung der Temperatur innerhalb der Naßzelle kann eine entsprechend ausgebildete Schaltkulisse vorgesehen sein, unter Verwendung derer der Anwender die innerhalb der Naßzelle 1 herrschende Temperatur wunschgemäß einstellen kann.

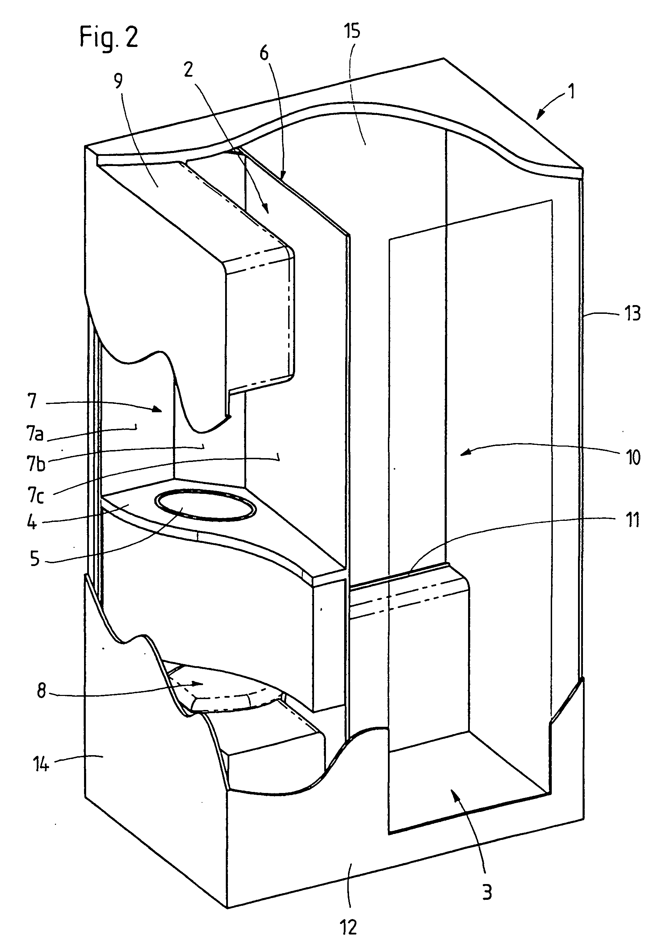

In Figur 2 ist die Naßzelle 1 in einer zweiten Funktion gezeigt. Ausgehend von der Darstellung in Fig. 1 wurde zum Erhalten der in Fig. 2 dargestellten Position die Trennwand 6 mit samt der daran angeordneten Waschkonsole 4 ausgehend von der an der Seitenwand 13 anliegenden Stellung in eine an der Seitenwand 14 anstoßende Stellung verschoben. Der als Waschraum und WC nutzbare Raum 2 ist auf ein Minimalmaß zusammengeschoben und kann durch die Eingangsöffnung 3 nicht mehr erreicht werden. Stattdessen ist in dieser Position eine Duschkabine 10 entstanden, welche durch die Seitenwand 13, die Rückwand 15 und die der Waschkonsole 4 gegenüberliegende Seite der Trennwand 6 begrenzt wird. In der Duschkabine 10 befinden sich in der Figur nicht näher dargestellte Duscharmaturen, welche vorzugsweise an der Trennwand 6 oder der Seitenwand 13 angeordnet sind.

Zu erkennen ist in dieser Figur auch, daß aufgrund der verschachtelten Anordnung von Toilette 8, Waschkonsole 4 und Oberschrank 9 diese Elemente beim Verschieben die Trennwand 6 und Verkleinern des Raumes 2 übereinander zu liegen kommen, was eine maximale Verkleinerung des Raumes 2 erlaubt.

Um ein Durchtreten von Duschwasser durch zwischen den Wänden der Naßzelle 1 und der Trennwand 6 gebildete Spalten zu verhindern, sind an der Trennwand 6 Dichtelemente angeordnet, die dichtend an den Wänden der Naßzelle anliegen.

Alternativ zur Ausgestaltung von Dichtungen an der Trennwand kann auch vorgesehen sein, die Abdichtung der Duschkabine zum Toiletten- oder Waschraum über zwei Duschkabinentüren zu erreichen, die an der Rückseite der Trennwand 6 befestigt sind. Die äußere Duschkabinentür ist dabei zweigeteilt, das heißt klappbar ausgebildet und schützt den Bereich der Eingangstür. Im aufgeklappten Zustand ist diese Tür in einer Schiene neben der Eingangstür arretierbar. Die hintere Duschkabinentür ist einstückig ausgebildet und wird durch beispielsweise einen Magnetschnapper an der Rückwand des Waschraums lagesichert fixiert. Durch das Aufklappen beider Türen kann eine sichere Abdichtung des Duschraumes zum Wasch- oder Toilettenraum erreicht werden. Vorgesehen sein können dabei an den beiden Türen Dichtelemente, die eine verbesserte Abdichtung der beiden Türen im aufgeklappten Zustand sicherstellen.

Für eine Be- und Entlüftung ist die Naßzelle mit wenigstens einer Dachhaube versehen. Die Dachhaube ist dabei aus einem zumindest teilweise transparenten Material gebildet, so daß natürliches Licht zur Ausleuchtung der Naßzelle in diese hineinfallen kann. Für eine Be- und Entlüftung der Naßzelle 1 ist die Dachhaube öffenbar ausgebildet, wobei ein Öffnen der Dachhaube entweder durch eine per Hand zu bedienende Mechanik oder alternativ durch einen entsprechend ausgebildeten elektrischen Antrieb erfolgen kann.

Beide Funktionsbereiche der Naßzelle 1 also die Duschkabine 10 auf der einen Seite und der Wasch- oder Toilettenraum auf der anderen Seite verfügen über eine gemeinsame als Fußboden ausgebildete Wanne. Ausgebildet ist diese Wanne mit einem Abwasserauslauf, über den sämtliches Abwasser der Naßzelle 1 grundsätzlich abgeführt wird. In der Funktionsstellung "Wasch- oder Toilettenraum" wird das Abwasser des Waschbeckens über ein entsprechend ausgebildetes Abwasserrohr abgeführt, das mit seinem einen Ende strömungstechnisch mit dem Abwasserauslauf der Wanne in Verbindung steht. In der Stellung "Duschraum oder Duschkabine" wird der Auslauf der Wanne als herkömmlicher Duschwannenauslauf genutzt. Sowohl das Abwasser, welches bei Inbenutzungnahme des Duschraumes oder bei Inbenutzungnahme des im Waschraum befindlichen Waschbeckens entsteht, wird gemeinschaftlich über ein und denselben in der gemeinsamen Duschwanne ausgebildeten Abwasserauslauf abgeleitet.

Die gezeigte Naßzelle weist im wesentlichen die gleichen Abmessungen auf wie eine herkömmliche, lediglich als Waschraum und WC nutzbare Naßzelle, kann jedoch aufgrund der verschiebbaren Trennwand 6 alternativ als Waschraum und WC 2 oder als Duschkabine 10 genutzt werden. Diese Möglichkeit der Doppelnutzung der gezeigten Naßzelle 1 schafft bei gleicher Raumnutzung eine Zusatzfunktion bzw. reduziert bei gleicher Funktionalität den erforderlichen Raum.

In vorteilhafter Weise ist die Naßzelle und/oder die Trennwand 6 mit Arretierungen zur lagesicheren Fixierung der Trennwand 6 versehen. Eine solche Arretierung ist dabei vorzugsweise selbstsichernd ausgebildet, so daß nach einem Verfahren der Trennwand 6 in die vom Anwender gewünschte Position eine Lagesicherung der Trennwand in dieser ausgesuchten Position automatisch erfolgt. Für ein Lösen der Arretierung sind vom Anwender entsprechend zu bedienende Entriegelungselemente vorgesehen, die leicht zugänglich positioniert entweder an der Trennwand 6 oder an einer der Wände der Naßzelle 1 ausgebildet sind.

In der Funktionsstellung "Waschraum" befindet sich ein deckenhoher Spiegel an der Rückwand des Waschraumes. In Duschstellung wird dieser Spiegel durch die Duschtür verdeckt, so daß Wasserspritzer auf den Spiegel in vorteilhafter Weise nicht gelangen können.

Zur Versorgung des Wasserhahns der Waschkonsole 4 mit Frischwasser ist ein mit dem Wasserhahn flexibler Schlauch vorgesehen, der zumindest zum Teil innerhalb der Trennwand 6 verlegt ist und der Bewegung der Trennwand 6 bei einem Verschieben folgt. Sichergestellt ist durch diese Ausgestaltung, daß der Wasserhahn unabhängig von der Stellung der Trennwand in jedem Fall mit Frischwasser versorgt werden kann.

### Bezugszeichenliste

- 1: Naßzelle
- 2: Waschraum und WC
- 3: Eingangsöffnung
- 4: Waschkonsole
- 5: Waschbecken
- 6: Trennwand
- 7: Spiegel
- 7a: verspiegelte Fläche
- 7b: verspiegelte Fläche
- 7c: verspiegelte Fläche
- 8: Toilette
- 9: Hängeschrank
- 10: Duschkabine
- 11: Schiene
- 12: Frontwand
- 13: Seitenwand
- 14: Seitenwand
- 15: Rückwand

## Patentansprüche

1. Naßzelle, insbesondere zur Verwendung in Wohnwagen oder Reisemobilen,
**gekennzeichnet durch**
mindestens ein die Naßzelle (1) in zwei Funktionsbereiche (2, 10) unterteilendes Trennelement (6), welches zur Funktionsanpassung der Naßzelle (1) verlagerbar ist.

2. Naßzelle nach Anspruch 1, **dadurch gekennzeichnet, daß** an dem Trennelement (1) ein Sanitärelement (4) angeordnet ist.

3. Naßzelle nach einem der vorhergehenden Ansprüche, **dadurch gekennzeichnet, daß** das Trennelement (6) zwischen zwei Extremstellungen verlagerbar ist, wobei die Naßzelle (1) in einer ersten Extremstellung des Trennelementes (6) als Waschraum und/oder WC (2) und in der zweiten Extremstellung als Duschkabine (10) nutzbar ist.

4. Naßzelle nach Anspruch 3, **dadurch gekennzeichnet, daß** an dem verlagerbaren Trennelement (6) auf der Seite des als Waschraum und/oder WC nutzbaren Funktionsbereiches (2) ein Waschbecken (5) und an einer dem Trennelement (6) gegenüberliegenden Wand desselben Funktionsbereichs (2) eine Toilette (8) angeordnet ist, wobei das Waschbecken (5) und die Toilette (8) so angeordnet sind, daß diese beim Verlagern des Trennelementes (6) in die zweite Extremstellung platzsparend nebeneinander bzw. übereinander zu liegen kommen.

5. Naßzelle nach einem der vorhergehenden Ansprüche, **gekennzeichnet durch** eine vertikal ausgerichtete und horizontal verschiebbare Trennwand als Trennelement (6).

6. Naßzelle nach Anspruch 5, **dadurch gekennzeichnet, daß** die Trennwand (6) an ihren äußeren Rändern Dichtelemente aufweist, die dichtend an den Wänden der Naßzelle (1) anliegen.

7. Naßzelle nach einem der vorhergehenden Ansprüche, **dadurch gekennzeichnet, daß** diese Leuchtmittel aufweist.

8. Naßzelle nach Anspruch 7, **dadurch gekennzeichnet, daß** Leuchtmittel oberhalb der Waschkonsole (4) an der Trennwand (6) angeordnet sind.

9. Naßzelle nach einem der vorhergehenden Ansprüche, **dadurch gekennzeichnet, daß** diese über eine Heizeinrichtung verfügt.

10. Naßzelle nach Anspruch 9, **dadurch gekennzeichnet, daß** die Heizeinrichtung durch eine innerhalb der Naßzelle (1) ausgebildete Heizung oder durch einen Wärmeluftaustritt einer außerhalb der Naßzelle (1) angeordneten Heizung gebildet ist.

11. Naßzelle nach einem der vorhergehenden Ansprüche, **dadurch gekennzeichnet, daß** die Trennwand (6) auf ihrer dem als Duschraum dienenden Funktionsbereich zugewandten Seite zwei klappbar ausgebildete Duschraumtüren aufweist.

12. Naßzelle nach Anspruch 11, **dadurch gekennzeichnet, daß** die Duschraumtüren Dichtungen aufweisen.

13. Naßzelle nach einem der vorhergehenden Ansprüche, **dadurch gekennzeichnet, daß** diese eine öffenbare Dachhaube aufweist.

14. Naßzelle nach einem der vorhergehenden Ansprüche, **dadurch gekennzeichnet, daß** eine für beide Funktionsbereiche gemeinsame Fußbodenwanne vorgesehen ist.

15. Naßzelle nach Anspruch 14, **dadurch gekennzeichnet, daß** die Fußbodenwanne einen Abwasserabfluß aufweist.

16. Naßzelle nach einem der vorhergehenden Ansprüche, **dadurch gekennzeichnet, daß** zur lagesicheren Positionierung der Trennwand (6) Arretiermittel vorgesehen sind.

17. Naßzelle nach einem der vorhergehenden Ansprüche, **dadurch gekennzeichnet, daß** die Trennwand (6) L-förmig ausgebildet ist und mit ihrem einen Fortsatz an der Rückwand (15) der Naßzelle (1) geführt wird, wobei die dem Funktionsbereich zugewandte Seite des Fortsatzes der Trennwand als multifunktionale Aufhängewand ausgebildet ist.

18. Naßzelle nach einem der vorhergehenden Ansprüche, **dadurch gekennzeichnet, daß** der Wasserhahn der Waschkonsole (4) mit einem zumindest teilweise innerhalb der Trennwand (6) verlegten, flexiblen Schlauch zur Frischwasserzuführung strömungstechnisch verbunden ist.
